# EUROPÄISCHE PATENTSCHRIFT

(11) **EP 1 102 824 B1**
(45) Veröffentlichungstag und Bekanntmachung des Hinweises auf die Patenterteilung: **22.03.2006**
(21) Anmeldenummer: 99913289.7
(22) Anmeldetag: 23.03.1999
(51) Int. Cl.: C09J 103/08, C09J 5/00

(54) **KLEBESTIFT AUF STÄRKEETHERBASIS**
ADHESIVE STICK MADE FROM STARCH ETHERS
BATON ADHESIF A BASE D'ETHERS D'AMIDON

(30) Priorität: 01.04.1998 DE 19814607
(43) Veröffentlichungstag der Anmeldung: 30.05.2001
(73) Patentinhaber: Henkel Kommanditgesellschaft auf Aktien, 40589 Düsseldorf (DE)
(72) Erfinder: MÜLLER, Wolf-Rüdiger, 40724 Hilden (DE); Jüttiner, Ivonne, 41352 Korschenbroich (DE)
(86) Internationale Anmeldenummer: PCT/EP1999/001937
(87) Internationale Veröffentlichungsnummer: WO 1999/051699

(56) Entgegenhaltungen:
- EP-A- 0 080 141
- EP-A- 0 832 951
- DE-A- 2 646 969
- DE-A- 4 125 122
- JP-A- 4 161 475
- US-A- 2 115 487

## Beschreibung

Die Erfindung betrifft einen Klebestift, bestehend aus einer wäßrigen Zubereitung von Stärkeethern als klebender Komponente und einem Seifengel als formgebender Gerüstsubstanz sowie gewünschtenfalls weiteren Hilfsstoffen. Des weiteren betrifft die Erfindung ein Verfahren zur Herstellung solcher Stifte sowie deren Verwendung.

Klebestifte (= stäbchenförmige Klebstoffe, die in einer verschließbaren Hülle verschiebbar gelagert sind und beim Abreiben auf einer Empfängerfläche einen klebrigen Film hinterlassen) sind heute Gebrauchsgegenstände des täglichen Lebens. Sie enthalten insbesondere (siehe hierzu DE-PS 18 11 466) wasserlösliche bzw. wasserdispergierbare synthetische Polymere mit Klebstoffcharakter - insbesondere Polyvinylpyrrolidon (PVP) - gelöst in einer wäßrig-organischen Flüssigphase zusammen mit einer formgebenden Gerüstsubstanz. Als Gerüstsubstanz werden insbesondere Alkali- bzw. Ammoniumsalze aliphatischer Carbonsäuren, insbesondere des C-Zahlbereichs von etwa 12 bis 22, verwendet. Werden die an sich hochklebrigen wäßrigen Zubereitungen der Polymersubstanzen mit Klebstoffcharakter zusammen mit geringen Mengen der Gerüstsubstanz auf Basis von Fettsäureseifen auf höhere Temperaturen, insbesondere oberhalb 50 °C, erwärmt und läßt man dann diese Lösung in Ruhestellung abkühlen, so erstarrt das Stoffgemisch zu einem mehr oder weniger steifen Seifengel, in dem die formgebende und vergleichweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Ein Klebestift gemäß Oberbegriff des Hauptanspruches wird in der EP 596 958 beschrieben. Neben den Stärkeethern können auch noch weitere makromolekulare Stoffe als klebende Komponente enthalten sein, z.B. Polyvinylpyrrolidon (PVP). Die Klebkraft derartiger Klebestifte liegt auf hohem Niveau und reicht auch für die meisten Anwendungen aus. Es gibt jedoch auch spezielle Situationen, in denen sie höher sein könnte, z.B. nach monatelanger Lagerung bei wechselnden klimatischen Bedingungen.

Die erfindungsgemäße Aufgabe besteht darin, einen Klebestift bereitzustellen, dessen Klebkraft nach mehrmonatiger Lagerung unter verschiedenen Klimabedingungen höher ist, ohne daß andere wichtige Eigenschaften wie Anfangsklebkraft und Handhabbarkeit (Abrieb, Druckfestigkeit) sich verschlechtern. Auch sie sollen möglichst noch verbessert werden.

Überraschenderweise wurde gefunden, daß ein solcher Klebestift erhalten wird, wenn als klebende Komponente mindestens ein viskositätsreduzierter Stärkeether zusammen mit Saccharose verwendet wird.

Die erfindungsgemäße Aufgabe wird also gelöst durch einen Klebestift, bestehend aus einer wäßrigen Zubereitung von mindestens einem viskositätsreduzierten Stärkeether mit einer Viskosität kleiner als 2 000 000 mPas und 15 bis 25 Gew.-% an Saccharose, bezogen auf die Gesamtmasse des Stiftes als klebender Komponente und einem Seifengel als formgebender Gerüstsubstanz sowie gewünschtenfalls weiteren Hilfsstoffen. Der Anteil von Saccharose an der Klebemasse beträgt vorzugsweise 18 bis 22 Gew.- %, bezogen auf die Gesamtmasse des Stiftes. Die Saccharose wird vorzugsweise in fester Form verwendet.

Unter "viskositätsreduzierten"Stärkeethern werden Stärkeether verstanden, die nicht nur weitgehend polymeranalog verethert wurden, sondern darüber hinaus auch noch chemisch oder physikalisch so destrukturiert wurden, daß ihre Viskosität kleiner als ca 2 000 000 mPas ist (30 %ige Lösung, 20 °C, Brookfield). Nach Ullmann, Encyklopädie der technischen Chemie, 4. Auflage, Verlag Chemie, Weinheim/Bergstraße (1974) sind Stärkeether formal Produkte der Kondensation zwischen den Hydroxygruppen der Anhydroglucose-Einheiten (AGE) von Stärkemolekülen und alkoholischen Hydroxygruppen anderer Verbindungen. Nur einige wasserlösliche dieser Stärkeethertypen werden in größerem Umfang hergestellt und industriell eingesetzt. Hierzu gehören bestimmte Hydroxyalkylstärken, speziell Hydroxyethyl- und Hydroxypropylstärke sowie Carboxymethylstärke. Als besonders geeignet im Sinne der Erfindung haben sich Umsetzungsprodukte von nativen Stärken mit Ethylenoxid, Propylenoxid, Butylenoxid und/oder Glyciden erwiesen. Insbesondere Stärkederivate mit höheren Substitutionsgraden, vorzugsweise nichtionogene Stärkeether lassen sich vorteilhafterweise bei mechanischer Behandlung in wäßrigen System durch den Abbau von kristallinen Strukturen und/oder durch oxidativen, säurehydrolytischen, enzymatischen und thermischen Abbau auf ein relativ niedriges Viskositätsniveau einstellen und sind deshalb in besonderem Maße geeignet. Besonders bevorzugt sind also viskositätsreduzierte nichtionische Stärkeether, insbesondere Hydroxyalkylstärke, da mit diesen am besten die gewünschten Klebestifte erhalten werden. Vorzugsweise sollte der Substitutionsgrad (DS) 0,1 bis 2,0, insbesondere 0,2 bis 1,0 betragen. Selbstverständlich können auch erfolgreich Mischveretherungsprodukte erfindungsgemäß verwendet werden. Die erfindungsgemäßen Klebestifte enthalten vorzugsweise 5 Gew.-% bis 50 Gew.-% an viskositätsreduzierten Stärkeethern. Dabei ist die Gewichtsprozentangabe auf die Gesamtmasse des Stiftes bezogen.

Zur Herstellung der erfindungsgemäß verwendbaren Stärkeethern lassen sich im Prinzip alle nativen Stärken einsetzen. Geeignete Stärken lassen sich dem genannten Ullmann, Band 22 in den Unterkapiteln 6.2 bis 6.4 zum Kapitel "Stärke" entnehmen. Neben den Getreidestärken wie Mais-, Weizen- oder Reisstärke sowie Knollen- oder Wurzelstärken wie Kartoffel- oder Tapiokastärke sind auch Leguminosenstärken wie Erbsen- oder Bohnenstärke geeignet.
Die wäßrigen Zubereitungen der viskositätsreduzierten Stärkeether werden vorzugsweise dadurch hergestellt, daß man die Stärkeether mit Wasser mischt und die Überstrukturen der Stärkeether durch physikalische, insbesondere mechanische Einwirkung - weitestgehend irreversibel - abbaut und/oder die Stärkeether chemisch abbaut, z.B. oxidiert, säurekatalytisch, enzymatisch bzw. thermisch abbaut. Auch eine Kombination der Einwirkungen ist möglich. Dabei werden konzentrierte Systeme mit einem Stärkeethergehalt von etwa 20 Gew.-% bis 70 Gew.-% bevorzugt, da sich erwiesen hat, daß in diesen Konzentrationsbereichen die technische Handhabung am einfachsten ist. Anschließend können die wäßrigen Zubereitungen mit den übrigen Bestandteilen in beschriebener Weise zusammengebracht werden. Gewünschtenfalls können die Stärkederivatzubereitungen vor dem Vermengen mit den anderen Bestandteilen verdünnt werden, vorzugsweise auf einen Stärkeethergehalt von 20 Gew.-% bis 40 Gew.-%.

Der mechanische Abbau der Strukturen derartiger wäßriger System kann in dem Fachmann bekannten mechanischen Vorrichtungen, vorzugsweise bei den genannten erhöhten Konzentration erfolgen. Als solche Vorrichtungen eignen sich Kneter, Extruder, Stator/Rotor-Maschinen und/oder Rührwerke. Der Grad des mechanischen Abbaus der Überstrukturen der wäßrigen Stärkederivatsysteme ist abhängig von der Konzentratione, der Temperatur, der Verweilzeit und der Scherung. Der Abbaugrad der Stärkeüberstrukturen sollte vorteilhafterweise nahe am erreichbaren Grenzwert liegen. Der Abbaugrad kann durch die Bestimmung der Lösungsviskositäten ermittelt werden. Ohne Nachteile kann der Abbau der Stärkeüberstrukturen auch während der Herstellung der Klebestiftmassen in Ansatzvorrichtungen erfolgen, in denen ein ausreichender Abbaugrad der Stärkeüberstrukturen erreicht werden kann.

Der mechanische Abbau der Stärke- bzw. Stärkeetherüberstrukturen kann durch einen chemischen Abbau der Stärkemoleküle auf das erfindungsgemäße Viskositätsniveau ergänzt oder ersetzt werden. Der partielle chemische Abbau der Stärke- bzw. Stärkeethermoleküle kann sowohl vor als auch nach dem mechanischen Abbau der Stärkeüberstrukturen durchgeführt werden. Ebenso können beide Prozesse auch voneinander unabhängig alleine durchgeführt wderden. Die Viskositätsreduzierung der Stärkeetherlösung kann auch ausschließlich durch einen chemischen Abbau auf das erfindungsgemäße Viskositätsniveau erfolgen Der Abbau der Stärkemoleküle kann nach dem Fachmann bekannten Verfahren durch oxidativen, säurehydrolytischen, enzymatischen oder thermischen Abbau erfolgen.

In "Ullmanns Encyklopädie der technischen Chemie", 4. Auflage, Verlag Chemie, Weinheim (1974) sind die üblichen Verfahren zum Abbau von Stärken näher beschrieben. Bevorzugte Oxidationsmittel für den oxidativen Abbau sind Chromsäure, Permanganat, Wasserstoffperoxid, Stickstoffdioxid, Hypochlorit, Perjodat und Persäuren wie z.B. Peressigsäure. Als Säuren für den säurehydrolytischen Abbau werden bevorzugt Salzsäure, Schwefel- oder Phosphorsäure eingesetzt, aber auch die Verwendung anderer Säuren wie z.B. Essigsäure, Oxalsäure, schweflige Säure, Perchlorsäure oder Trichloressigsäure ist möglich. Als stärkeabbauende Enzyme können alpha- und beta-Amylasen sowie die Glucoamylasen und entzweigende Enzyme eingesetzt werden.

Ein ausreichender Abbaugrad im Sinne der Erfindung ist zweckmäßigerweise erreicht, wenn eine 30 Gew.-%ige wäßrige Lösung des verwendeten Stärkeethers bei 20 °C eine Viskosität nach Brookfield von etwa 100 bis 1 000 000 mPas, vorzugsweise 2 000 bis 100 000 mPas, insbesondere 3 000 bis 30 000 mPas aufweist, jeweils in Lösung mit 30 % Festkörpergehalt, gemessen (Brookfield, 20 °C). Als besonders geeignet haben sich Klebestifte erwiesen, die 5 Gew.-% bis 10 Gew.-% der erfindungsgemäßen Stärkeether mit einer Viskosität von 1 000 000 bis 50 000 mPas oder 10 bis 30 Gew.-% mit einer Viskosität von 100 000 bis 2 000 mPas oder 30 bis 50 Gew.-% mit einer Viskosität von 30 000 bis 100 mPas enthalten. Außerdem können weitere Polymere als klebende Komponente zugesetzt werden, und zwar bis zu insgesamt 50 Gew.-%. Die Gew.-% beziehen sich auf das Gesamtgewicht des Klebestiftes.

Neben den erfindungsgemäßen viskositätsreduzierten Stärkeethern kann der Klebestift noch andere wasserlösliche und/oder wasserdispergierbare Polymere (z.B. Polyurethan-Dispersionen, Polyvinylpyrrolidon und/oder Polyacrylate) als klebende Komponente enthalten. Der Anteil der klebenden Komponenten insgesamt sollte 15 bis 50 Gew.-% betragen. Der Gehalt an PVP liegt vorzugsweise bei 0 %.

Die erfindungsgemäßen Klebestifte enthalten als Seifen zur Ausbildung der Gelstruktur zweckmäßigerweise Natriumsalze von C₁₂- bis C₂₂-Fettsäuren natürliche oder synthetischen Ursprungs. Bevorzugt sind hier C₁₄- bis C₁₈₋Fettsäuren und deren Gemische. Die Natriumsalze der Fettsäuren, also die Seifen, sind in Mengen von 3 bis 20 Gew.-%, bezogen auf Klebestiftmasse, vorzugsweise von 5 bis 10 Gew.-%, vorhanden.

In den erfindungsgemäßen Klebestiften können die bei Klebestiften üblichen Hilfsstoffe in Mengen von 0 bis 25 Gew.-%, bezogen auf den Klebestift, mit eingesetzt werden. Dies sind beispielsweise Weichmacher und/oder feuchtigkeitsregulierende Stoffe - das sind organische wasserlösliche Lösungsmittel -, die üblicherweise in Klebestiften verwendet werden. Mit eingesetzt werden können weiterhin polyfunktionelle Alkohole wie Propylenglykol, Glycerin, Polyglycerine, Trimethylolpropan, Polyetherglykole sowie Sorbit und/oder niedermolekulare Stärkehydrolysate, die durch Wasserstoffreduktion in die entsprechenden Polyole umgesetzt wurden. Es kann beispielsweise ein Gemisch aus Glycerin und Polyethylenglykol mitverwendet werden. Die genannten nichtflüchtigen organischen Lösungsmittel sollten hierbei höchstens in Mengen bis 50 Gew.-%, bezogen auf den Wassergehalt der Stifte, eingesetzt werden. Vorzugsweise ist der Gehalt an Glycerin und Propylenglykol 0 %.

Neben den hier geschilderten Hauptkomponenten können übliche Hilfsmittel mitverwendet werden, beispielsweise Substanzen, die den leichten und weichen Abrieb fördern. Derartige Substanzen sind beispielsweise Aminocarbonsäuren und/oder ihre Lactame. Geeignete Aminocarbonsäuren bzw. deren Lactame sollten bis zu 12 C-Atomen, insbesondere 4 bis 8 C-Atome enthalten. Der für die praktische Verwendung bevorzugte Vertreter ist Epsilon-Caprolactam bzw. die sich daraus ableitende 7-Aminocapronsäure. Die Menge der zu verwendenden Lactame oder der entsprechenden Aminocarbonsäuren beträgt üblicherweise nicht mehr als 15 Gew.-%, beispielsweise 1 Gew.-% bis 10 Gew.-%, bezogen auf die Gesamtstiftmasse.

Als weitere Hilfsstoffe können die erfindungsgemäßen Klebestifte Pigmente, Farbstoffe, Duftstoffe, Konservierungsmittel und dergleichen enthalten. Die Mengen dieser Stoffe sind wie übliche untergeordnet. Weitere mögliche Additive sind beispielsweise Füllstoffe, optische Aufheller, Dextrine, Cellulosederivate und nicht destrukturierte Stärkederivate. Als weitere Additive können Mannane, insbesondere Galactomannane in den erfindungsgemäßen Klebestiften enthalten Sein. Geeignet sind insbesondere die Galactomannane aus den Früchten des Johannisbrotbaums und aus Guarmehl. Die destrukturierten Stärkeether können auch zu einem untergeordneten Anteil durch destrukturierte Mannane ersetzt werden.

Die einzelnen Komponenten sind vorzugsweise in folgenden Mengen im Klebestift enthalten: 3 bis 10 Gew.-% Natrium-Seifen, 5 bis 40 Gew.-% viskositätsreduzierter Stärkeether, 15 bis 25 Gew.-% an Saccharose und 0 bis 25 Gew.-% Hilfsstoffe, und 0 bis 20 Gew.-% wasserlösliche bzw. dispergierbare Polymere. Der Rest zu 100 % ist Wasser.

Die erfindungsgemäßen Klebestifte werden dadurch hergestellt, daß zunächst ein wäßriges, vorzugsweise hochkonzentriertes System geeigneter Stärkederivate unter Abbau der Überstrukturen durch Einwirkung und/oder durch einen chemischen Abbau hergestellt und mit 15 bis 25 Gew.-% Saccharose, bezogen auf die Gesamtmasse des Stiftes, vermischt wird und dann diese Zubereitung-gewünschtenfalls mit Wasser verdünnt - mit den das Seifengel bildenden Bestandteilen sowie gegebenenfalls mit den weiteren Hilfsstoffen innig vermischt, auf Temperaturen von mindestens 50 °C, vorzugsweise auf bis zu 80 °C, erwärmt wird, bis eine gleichmäßige Mischung entstanden ist und man diese ohne mechanische Beeinflussung unter Gelbildung abkühlen läßt. Es ist bevorzugt, diese Mischungen, die im erwähnten Temperaturbereich leicht gießbar sind, direkt in Stifthülsen oder ähnliche Gebinde abzufüllen und ohne mechanische Beeinflussung zu den gewünschten Gelen erstarren zu lassen.

Die erfindungsgemäßen Klebestifte zeigen eine besonders hohe Klebkraft, die auch nach Lagerung unter verschiedenen klimatischen Bedingungen nicht nachläßt, zumindest kommt es noch zum Substratbruch (Papier). Daher sind sie neben dem flächigen Verbinden von Substraten insbesondere für die dauerhafte Verklebung von Papier und/oder Pappe anwendbar. Sie lassen sich darüber hinaus gewünschtenfalls auch ohne Verwendung wasserlöslicher Weichmacher (wasserlösliche organische Lösungsmittel) oder feuchtigkeitsregulierende Stoffe (ebenfalls wasserlösliche organische Lösungsmittel) herstellen.

Die erfindungsgemäßen Klebestifte zeichnen sich durch einen geschmeidigen Abrieb aus, wobei mit niedriger Kraft ein gleichmäßiger Film ohne Unebenheiten erhalten wird.

Die Druckfestigkeiten liegen bei ca. 30 bis 70 N/16 mm ∅.
Die erfindungsgemäße Klebstoffmasse ist lagerstabil, d.h. es zeigen sich keine Separationserscheinungen innerhalb von 72 Stunden bei 72 °C, was für den Produktionsablauf von wesentlicher Bedeutung ist.

### Beispiele

### I Ausgangsmaterialien

1. Stärkeether gemäß Beispiel 10a der EP 596 958 B10.
2. Polyvinylpyrrolidon PVP mit einem K-Wert von 90.
3. Monocarbonsäuren-Gemisch mit 14 bis 18 C-Atomen.

### II Herstellung der Klebestifte

Die Komponenten gemäß Tabelle I werden bei ca. 70 °C gemischt und gemäß Seite 7 der Beschreibung zu Klebestiften verarbeitet.

### III Eigenschaften der Klebestifte

### 1. Verklebung und Probenvorbereitung

Verklebt wurden folgende Substrate
1. Soennecken Spezial Kopierpapier 5015 mit
   a) Photos (Kodak Royal Papier)
   b) Soennecken Spezial Kopierpapier 5015
   c) Soennecken Briefblock Schreibpapier, kariert
   d) Regenbogen Tonpapier, Pelikan
   e) Regenbogen Buntpapier, Pelikan
2. Photos (Kodak Royal) in Photoalben
   **Lagerung**
   0 bis 6 Monate bei
   a) Raumtemperatur (20 °C / 50 % rel. Luftfeuchtigkeit)
   b) 40 °C / 20 % rel. Luftfeuchtigkeit
   c) 30 °C / 80 % rel. Luftfeuchtigkeit

### 2. Untersuchungen

### a) Druckfestigkeit

Unter dem Begriff Druckfestigkeit ist die beim Zusammenbrechen der Stiftform unter Druckbelastung parallel zur Längsachse gemessene Höchstlast zu verstehen.

Zur Messung der Druckfestigkeit dient das Prüfgerät Modell 464L, Meßkopf 709, der Fa. Erichsen, Simonshöfchen 31, 56 Wuppertal 11.

Der unmittelbar oberhalb des Kolbens abgeschnittene Klebstoff mit einer Mindestlänge von 30 mm wird zwischen zwei Haltestücke eingesteckt; hierbei handelt es sich um Scheiben aus Hart-PVC, deren Dicke ca. 10 mm beträgt und die eine, den jeweiligen Stiftdurchmesser angepaßte kreisrunde Vertiefung von 3 mm aufweisen. Der mit den Haltestücken versehene Stift wird zentrisch auf den Prüftisch des Druckfestigkeitstesters gestellt. Die Höhe des Kraftmeßinstrumentes über dem Prüftisch wird der Höhe des Prüfteils angepaßt. Dann fährt man den Meßkopf mit einer Vorschubgeschwindigkeit von ca. 70 mm pro Minute gegen den zu prüfenden Stift. Nach Erreichen der größten Druckkraft wird der Wert von der digitalen Anzeige abgelesen.

### b) Abbindezeit

Um zu prüfen, ob die Klebeeigenschaften der Stifte für den Verwendungszweck ausreichen, werden unter bestimmten Verarbeitungsbedingungen von Hand Probeklebungen durchgeführt und beurteilt. Hierbei wird wie folgt verfahren:

Ein Vorrat an weißem Soennecken 5015 Spezial-Copierpapier DIN A4 (Flächengewicht ca. 80 g/m²) und zu prüfende Klebestifte werden mindestens 24 Stunden bei 20 °C und 65 % rel. Luftfeuchtigkeit klimatisiert. Das Prüfpapier wird in 5 cm breite und ca. 30 cm lange Streifen geschnitten. Über die ungestrichene Seite eines solchen Papierstreifens wird ein Klebestift, unter möglichst gleichmäßigem Druck, in Längsrichtung zweimal abgerieben, wobei ein gleichmäßiger Auftrag entstehen soll. Unmittelbar danach wird auf diesen Streifen ein zweiter, nicht mit Klebstoff versehener Papierstreifen mit gleicher Oberfläche nach innen aufgelegt und mit der Hand angerieben. Sodann wird versucht, die Papierstreifen langsam voneinander abzuschälen. Der Zeitpunkt, zu dem eine Trennung in der Klebzone nur noch unter Papierausriß auf voller Breite möglich ist, kennzeichnet die Abbindezeit.

### c) Offene Zeit

Die offene Zeit beschreibt den Zeitraum nach dem Klebstoffauftrag, innerhalb dessen ein Zusammenfügen der zu klebenden Materialien erfolgen muß, um nach der Abbindung noch einen vollständigen Papierausriß im Trennversuch zu erhalten. Die Methode entspricht der Prüfung der Abbindezeit, jedoch werden die Papierstreifen nach dem Klebstoffauftrag erst nach definierten Zeiten zusammengefügt. Beginnend mit 15 Sekunden kann die Abstufung beispielsweise jeweils weitere 15 Sekunden betragen. Bei langsam abbindenden Klebstoffen mit einer voraussehbaren längeren offenen Zeit wählt man entsprechend größere Abstände.

### d) Klebkraft

Zu den Verklebungen siehe "Abbindezeit".
Nach der angegebenen Lagerzeit unter den angegebenen KlimaBedingungen werden die Papierstreifen mit der Hand auseinandergezogen (manueller Abriß). Das dabei erhaltene "Bruchbild" wird visuell nach folgendem Erscheinungsbild klassifiziert
1 100 % Materialausriß
2 ca. 50 % Materiallausriß
3 Leichter Faserriß
4 Haftung, aber ohne Materialriß
5 sehr schwache Haftung (Substrat Trennung)
Die Prüfungsergebnisse der Klebkraft nach Lagerung sind in Tabelle II zusammengefaßt.

### IV Ergebnisse

Die einzelnen Ergebnisse sind in Tabelle I und II zusammengefaßt. Sie zeigen, daß es durch die Verwendung von Saccharose gelungen ist, einen Klebestift herzustellen, der vor allem nach mehrmonatiger Lagerung unter veschiedenen Klimabedingungen eine signifikant höhere Klebkraft aufweist als eine Formulierung des im EP 596 958 beschriebenen Stiftes.

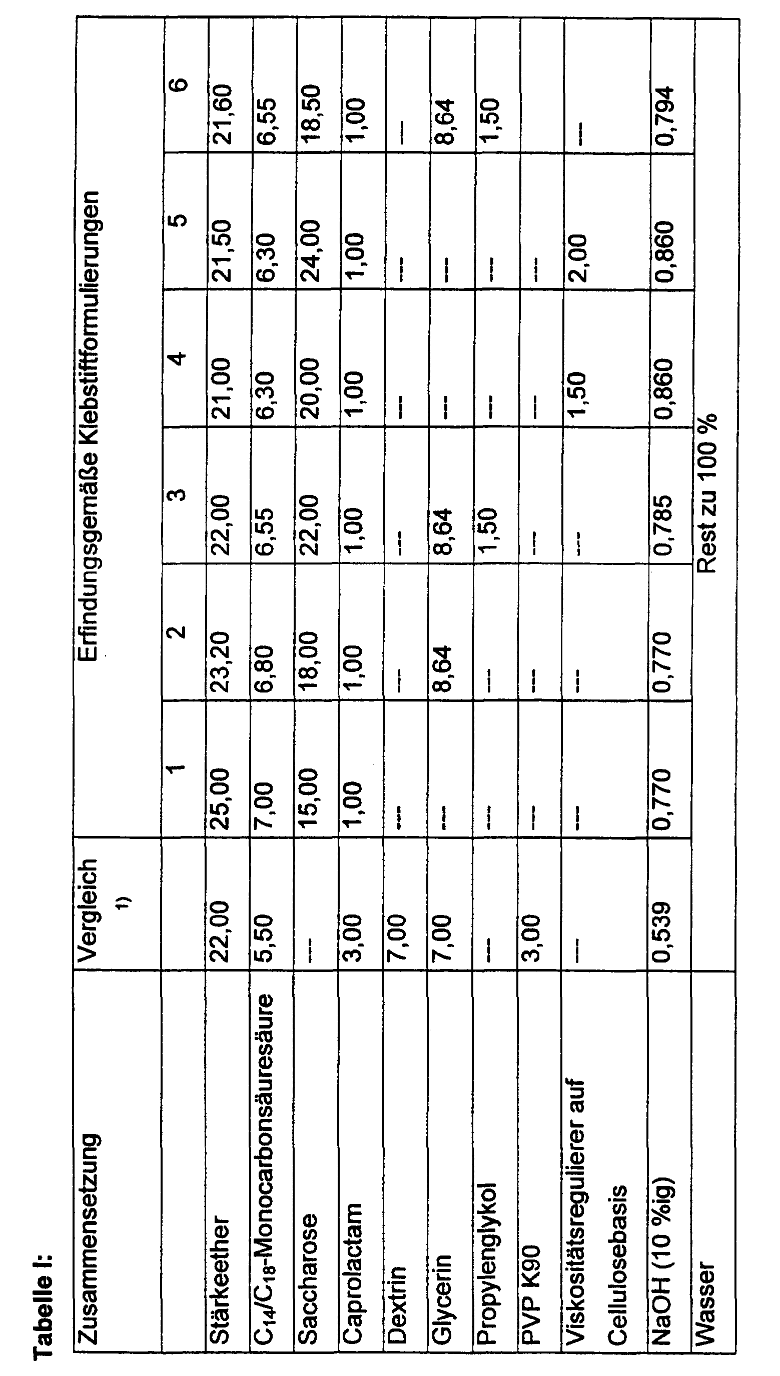

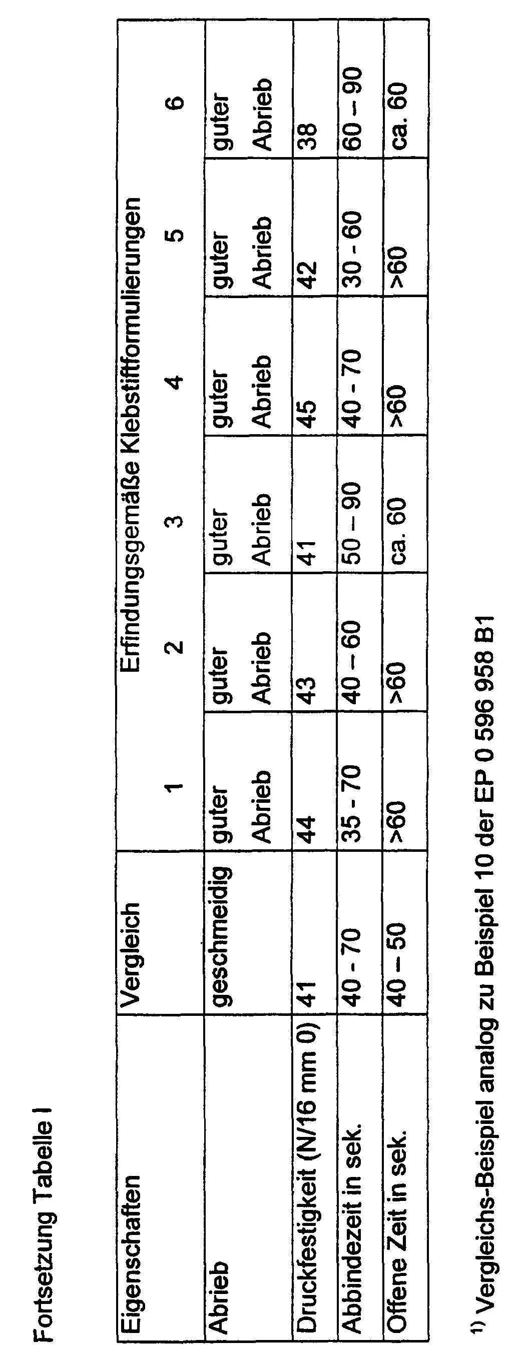

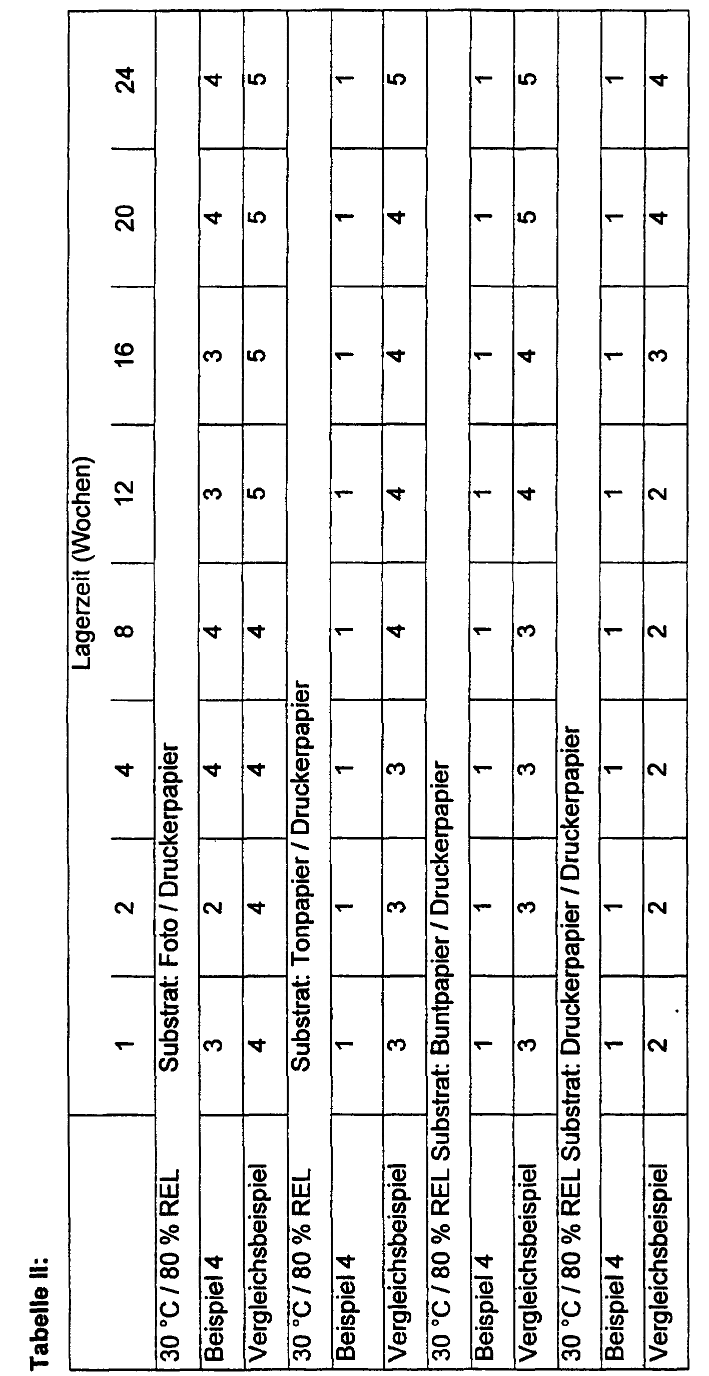

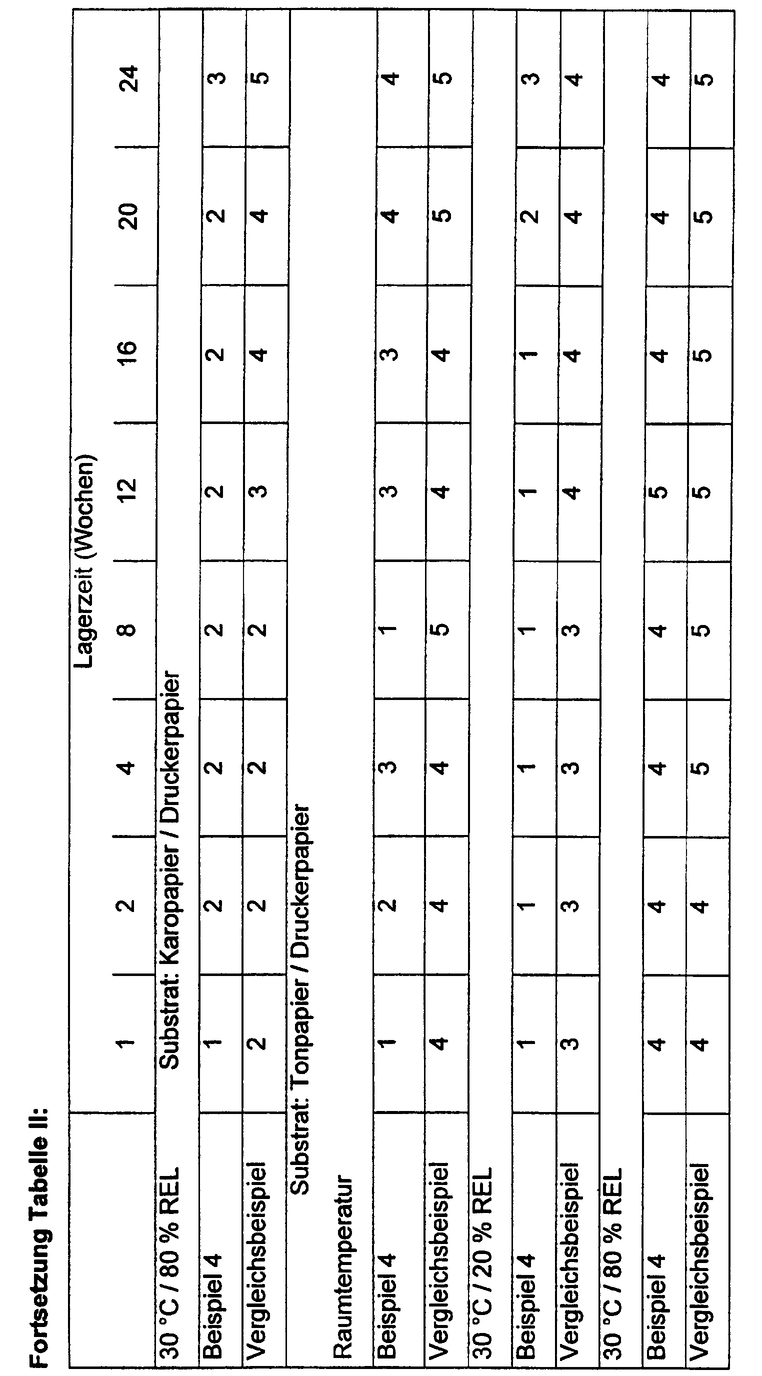

## Patentansprüche

1. Klebestift, bestehend aus einer wäßrigen Zubereitung mindestens eines Stärkeethers mit einer Viskosität kleiner als 2 000 000 mPas als klebender Komponente und einem Seifengel als formgebender Gerüstsubstanz sowie gewünschtenfalls weiteren Hilfsstoffen, **dadurch gekennzeichnet, daß** er 15 bis 25 Gew.-% an Saccharose enthält, bezogen auf die Gesamtmasse des Stiftes.

2. Klebestift nach Anspruch 1, **dadurch gekennzeichnet, daß** die Stärkeether nicht ionisch sind.

3. Klebestift nach mindestens einem der vorstehenden Ansprüche, **dadurch gekennzeichnet, daß** der Substitutionsgrad (DS) der Stärkeether 0,1 bis 2,0 beträgt.

4. Klebestift nach mindestens einem der Ansprüche 1, 2 oder 3, **dadurch gekennzeichnet, daß** die Viskosität der Stärkeether durch physikalische sowie chemische oder durch Kombination obengenannter Einwirkungen reduziert wird.

5. Klebestift nach mindestens einem der Ansprüche 1 bis 4, **dadurch gekennzeichnet, daß** die Stärkeether nach der Destrukturierung eine Viskosität von 100 bis 1 000 000 mPas aufweisen, jeweils in Lösung mit 30 % Festkörpergehalt gemessen (Brookfield, 20 °C).

6. Klebestift nach mindestens einem der Ansprüche 1 bis 5, **dadurch gekennzeichnet, daß** er 5 bis 10 Gew.-% an Stärkeether mit einer Viskosität von 1 000 000 bis 50 000 mPas oder 10 bis 30 Gew.-% an Stärkeether mit einer Viskosität von 100 000 bis 2 000 mPas oder 30 bis 50 Gew.-% an Stärkeether mit einer Viskosität von 30 000 bis 100 mPas enthält, wobei sich die Gew.-% auf den Klebestift insgesamt beziehen und die Viskosität einer 30 Gew.-%igen wäßrigen Lösung bei 20 °C gemeint ist.

7. Klebestift nach mindestens einem der vorangegangenem Ansprüche, **dadurch gekennzeichnet, daß** der Gehalt an Saccharose 18 bis 22 Gew.-%, bezogen auf die Gesamtmasse des Stiftes, beträgt.

8. Klebestift nach mindestens einem der vorstehenden Ansprüche, **dadurch gekennzeichnet, daß** als die Gelstruktur bildende Seife Natriumsalze von C₁₂- bis C₂₂-Fettsäuren natürlichen oder synthetischen Ursprungs enthalten sind.

9. Klebestift nach mindestens einem der vorstehenden Ansprüche, **dadurch gekennzeichnet, daß** die Natriumsalze der Fettsäuren in Mengen von 3 von bis 20, 20, bezogen auf die Gesamtmasse des Stiftes, enthalten sind.

10. Klebestift nach mindestens einem der vorstehenden Ansprüche, **dadurch gekennzeichnet, daß** als weitere Hilfsstoffe Weichmacher, Pigmente, Farbstoffe, Duftstoffe, Konservierungsmittel und/oder feuchtigkeitsregulierende Stoffe sowie gewünschtenfalls weitere wasserlösliche und/oder wasserdispergierbare Polymere enthalten sind.

11. Klebetift nach mindestens einem der vorstehenden Ansprüche, **dadurch gekennzeichnet, daß**
3 bis 10 Gew.-% Natrium-Seifen
5 bis 40 Gew.-% viskositätsreduzierte Stärkeether
15 bis 25 Gew.-% Saccharose
0 bis 25 Gew.-% Hilfsstoffe
0 bis 20 Gew.-% an wasserlöslichen bzw. dispergierbaren Polymeren
Rest zu 100 Gew.-% Wasser
enthalten sind.

12. Verfahren zur Herstellung eines Klebestiftes gemäß den vorstehenden Ansprüchen, **dadurch gekennzeichnet, daß** zunächst ein wäßriges System geeigneter Stärkederivate unter Abbau der Überstrukturen durch mechanische Einwirkung und/oder durch einen chemischen Abbau hergestellt und mit 15 bis 25 Gew.-% an Saccharose, bezogen auf die Gesamtmasse des Stiftes, vermischt wird und dann diese Zubereitung - gewünschtenfalls mit Wasser verdünnt - mit den das Seifengel bildenden Bestandteilen sowie gegebenenfalls mit den weiteren Hilfsstoffen innig vermischt wird, auf Temperaturen von mindestens 50 °C erwärmt wird, bis eine gleichmäßige Mischung entstanden ist und diese Mischung ohne mechanische Beeinflussung unter Gelbildung abgekühlt wird.

13. Verwendung der Klebestifte gemäß vorstehenden Ansprüchen 1 bis 12 zum flächigen Verbinden von Substraten.

14. Verwendung von viskositätsreduzierten Stärkeethern nach mindestens einem der Ansprüche 1 bis 5 zusammen mit 15 bis 25 Gew.% an Saccharose, bezogen auf die Gesamtmasse des Stiftes, als klebende Komponente in Klebestiften.

## Revendications

1. Bâton d'adhésif, constitué par une composition aqueuse d'au moins un éther d'amidon présentant une viscosité inférieure à 2 000 000 mPa.s comme composant adhésif et un gel de savon comme agent de structuration de façonnage ainsi que, si souhaité, d'autres adjuvants, **caractérisé en ce qu'**il contient 15 à 25% en poids de saccharose par rapport à la masse totale du bâton.

2. Bâton d'adhésif selon la revendication 1, **caractérisé en ce que** les éthers d'amidon sont non ioniques.

3. Bâton d'adhésif selon au moins l'une quelconque des revendications précédentes, **caractérisé en ce que** le degré de substitution (DS) des éthers d'amidon est de 0,1 à 2,0.

4. Bâton d'adhésif selon au moins l'une quelconque des revendications 1 , 2 ou 3, **caractérisé en ce que** la viscosité des éthers d'amidon est réduite par des effets physiques et chimiques ou par une combinaison des effets susmentionnés.

5. Bâton d'adhésif selon au moins l'une quelconque des revendications 1 à 4, **caractérisé en ce que** les éthers d'amidon après la déstructuration présentent une viscosité de 100 à 1 000 000 mPa.s, mesurée à chaque fois en solution avec une teneur en solides de 30% (Brookfield, 20°C).

6. Bâton d'adhésif selon au moins l'une quelconque des revendications 1 à 5, **caractérisé en ce qu'**il contient 5 à 10% en poids d'éthers d'amidon présentant une viscosité de 1 000 000 à 50 000 mPa.s ou 10 à 30% en poids d'éthers d'amidon présentant une viscosité de 100 000 à 2 000 mPa.s ou 30 à 50% en poids d'éthers d'amidon présentant une viscosité de 30 000 à 100 mPa.s, les % en poids se rapportant au bâton d'adhésif dans sa totalité et la viscosité étant celle d'une solution aqueuse à 30% en poids à 20 °C.

7. Bâton d'adhésif selon au moins l'une quelconque des revendications précédentes, **caractérisé en ce que** la teneur en saccharose est de 18 à 22% en poids, par rapport à la masse totale du bâton.

8. Bâton d'adhésif selon au moins l'une quelconque des revendications précédentes, **caractérisé en ce que** sont contenus, comme savons formant la structure de gel, des sels sodiques d'acides gras en C₁₂ à C₂₂ d'origine naturelle ou synthétique.

9. Bâton d'adhésif selon au moins l'une quelconque des revendications précédentes, **caractérisé en ce que** les sels sodiques d'acides gras sont contenus en des quantités de 3 à 20 % en poids par rapport à la masse totale du bâton.

10. Bâton d'adhésif selon au moins l'une quelconque des revendications précédentes, **caractérisé en ce qu'**il contient comme autres adjuvants des plastifiants, des pigments, des colorants, des parfums, des conservateurs et/ou des substances de régulation de l'humidité ainsi que, si souhaité, d'autres polymères solubles et/ou dispersibles dans l'eau.

11. Bâton d'adhésif selon au moins l'une quelconque des revendications précédentes, **caractérisé en ce qu'**il contient
3 à 10% en poids de savons sodiques
5 à 40% en poids d'éthers d'amidon réduisant la viscosité
15 à 25% en poids de saccharose
0 à 25% en poids d'adjuvants
0 à 20% en poids de polymères solubles resp. dispersibles dans l'eau
pour le reste jusqu'à 100% d'eau.

12. Procédé de fabrication d'un bâton d'adhésif selon les revendications précédentes, **caractérisé en ce qu'**on prépare d'abord un système aqueux de dérivés d'amidon appropriés avec dégradation des superstructures par un effet mécanique et/ou par une dégradation chimique et on mélange avec 15 à 25% en poids de saccharose, par rapport à la masse totale du bâton et la composition est - si souhaité diluée avec de l'eau - mélangée intimement avec les constituants formant le gel de savon ainsi que le cas échéant avec les autres adjuvants, chauffée à des températures d'au moins 50°C jusqu'à formation d'un mélange uniforme et ce mélange est refroidi sans influence mécanique en formant un gel

13. Utilisation des bâtons d'adhésif selon les revendications précédentes 1 à 12 pour l'assemblage à plat de substrats.

14. Utilisation d'éthers d'amidon réduisant la viscosité selon au moins l'une quelconque des revendications 1 à 5 avec 15 à 25% en poids de saccharose, par rapport à la masse totale du bâton, comme composant adhésif dans des bâtons d'adhésif.

## Claims

1. An adhesive stick consisting of a water-based preparation of at least one starch ether with a viscosity below 2,000,000 mPas as the adhesive component and a soap gel as the shaping gel-forming component and, optionally, other auxiliaries, **characterized in that** it contains 15 to 25% by weight sucrose, based on the total weight of the stick.

2. An adhesive stick as claimed in claim 1, **characterized in that** the starch ethers are nonionic.

3. An adhesive stick as claimed in at least one of the preceding claims, **characterized in that** the degree of substitution (DS) of the starch ethers is from 0.1 to 2.0.

4. An adhesive stick as claimed in at least one of claims 1, 2 or 3, **characterized in that** the viscosity of the starch ethers is reduced by physical and chemical influence or by a combination of those.

5. An adhesive stick as claimed in at least one of claims 1 to 4, **characterized in that**, after destructuring, the starch ethers have a viscosity of 100 to 1,000,000 mPas, as measured in a solution having a solids content of 30% (Brookfield, 20°C).

6. An adhesive stick as claimed in at least one of claims 1 to 5, **characterized in that** it contains 5 to 10% by weight starch ethers having a viscosity of 1,000,000 to 50,000 mPas or 10 to 30% by weight starch ethers having a viscosity of 100,000 to 2,000 mPas or 30 to 50% by weight starch ethers having a viscosity of 30,000 to 100 mPas, the percentages by weight being based on the adhesive stick as a whole and the viscosity being that of a 30% by weight aqueous solution at 20°C.

7. An adhesive stick as claimed in at least one of the preceding claims, **characterized in that** the sucrose content is 18 to 22% by weight, based on the total weight of the stick.

8. An adhesive stick as claimed in at least one of the preceding claims, **characterized in that** sodium salts of C₁₂₋₂₂ fatty acids of natural or synthetic origin are present as the soap forming the gel structure.

9. An adhesive stick as claimed in at least one of the preceding claims, **characterized in that** the sodium salts of the fatty acids are present in quantities of 3 to 20% by weight, based on the total weight of the stick.

10. An adhesive stick as claimed in at least one of the preceding claims, **characterized in that** plasticizers, pigments, dyes, perfumes, preservatives and/or moisture regulators and, optionally, other water-soluble and/or water-dispersible polymers are present as further auxiliaries.

11. An adhesive stick as claimed in at least one of the preceding claims, **characterized in that** it contains
3 to 10% by weight sodium soaps,
5 to 40% by weight viscosity-reduced starch ethers,
15 to 25% by weight sucrose,
0 to 25% by weight auxiliaries,
0 to 20% by weight water-soluble or dispersible polymers;
balance to 100% by weight water.

12. A process for the production of the adhesive stick claimed in the preceding claims, **characterized in that** an aqueous, preferably highly concentrated system of suitable starch derivatives is initially prepared with degradation of the superstructures by mechanical action and/or by chemical degradation, the resulting system is mixed with 15 to 25% by weight sucrose, based on the total weight of the stick, and the preparation obtained, optionally diluted with water, is then thoroughly mixed with the components forming the soap gel and optionally with the other auxiliaries, heated to temperatures of at least 50°C until a uniform mixture is obtained and the mixture thus obtained is left to cool in the absence of mechanical action to form a gel.

13. The use of the adhesive sticks claimed in claims 1 to 12 for the surface-to-surface bonding of substrates.

14. The use of viscosity-reduced starch ethers according to at least one of claims 1 to 5 together with 15 to 25% by weight sucrose, based on the total weight of the stick, as the adhesive component in adhesive sticks.
